# EUROPEAN PATENT APPLICATION

(11) **EP 4 613 885 A1**
(43) Date of publication of application: **10.09.2025**
(21) Application number: 23907845.4
(22) Date of filing: 21.12.2023
(51) Int. Cl.: C21D 1/18, C22C 38/02, C22C 38/34, C22C 38/00, B21B 1/16, C21D 8/06, C21D 9/52, F16F 1/04

(54) **WIRE ROD AND STEEL WIRE FOR SPRING, SPRING, AND METHOD FOR MANUFACTURING SAME**

(30) Priority: 21.12.2022 KR 20220181049
(71) Applicant: POSCO Co., Ltd, Pohang-si, Gyeongsangbuk-do 37859 (KR)
(72) Inventor: CHUN, Youngsoo, Pohang-si, Gyeongsangbuk-do 37669 (KR); CHOI, Myungsoo, Pohang-si, Gyeongsangbuk-do 37669 (KR); PARK, Sewon, Pohang-si, Gyeongsangbuk-do 37881 (KR); CHOI, Seokhwan, Pohang-si, Gyeongsangbuk-do 37904 (KR)
(74) Representative: Nederlandsch Octrooibureau
(86) International application number: PCT/KR2023/021356
(87) International publication number: WO 2024/136562

(57) **Abstract**

A spring according to an embodiment of the present disclosure may include a tempered martensite structure, wherein, among Fe carbides precipitated in the tempered martensite structure, an average thickness of carbides having a thickness of 100 nm or less may be 5 nm to 12 nm, the spring may include 90% or more of the tempered martensite structure in an area fraction, a density of the carbides having the thickness of 100 nm or less may be 20 particles/µm² or more, preferably 40 particles/µm² or more and 64 particles/µm² or less. In addition, the spring may have a dislocation density of 6.0x10¹³/m² or more and 3.0x10¹⁴/m² or less, may include, in percent by weight (wt%), 0.48 to 0.62% of carbon (C), and 1.5 to 2.0% of silicon (Si), and may further include, 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities.

## Description

### [Technical Field]

The present disclosure relates to a wire rod and a steel wire for a spring, a spring, and methods for manufacturing the same.

### [Background Art]

A suspension spring is designed to receive repeated fatigue loads in an elastic region below the yield strength, but plastic deformation occurs in a local region, causing fatigue failure. In addition, the suspension spring is constantly under compressive stress due to the curb weight of a vehicle, causing local permanent deformation. The cause of the local plastic deformation is the movement of dislocation due to repeated fatigue loads and static loads occurring at a stress below the yield strength.

Conventionally, carbide elements such as Mo, V, and W have been added to improve the fatigue strength and permanent deformation resistance of steel with a tempered martensite structure. However, the addition of a large amount of relatively expensive carbide elements may reduce cost competitiveness. Accordingly, the development of a technology capable of optimizing the amount of the carbide elements and a manufacturing method therefor is required.

### [Disclosure]

### [Technical Problem]

The present disclosure provides a wire rod and a steel wire for a spring, a spring, and methods for manufacturing the same, having improved permanent deformation resistance.

### [Technical Solution]

According to an embodiment of the present disclosure, a spring includes a tempered martensite structure, and among Fe carbides precipitated in the tempered martensite structure, an average thickness of carbides having a thickness of 100 nm or less is 5 nm to 12 nm.

Also, the spring according to an embodiment of the present disclosure may include 90% or more of the tempered martensite structure in an area fraction.

Also, in the spring according to an embodiment of the present disclosure, a density of the carbides having the thickness of 100 nm or less may be 20 particles/µm² or more.

Also, in the spring according to an embodiment of the present disclosure, a density of the carbides having the thickness of 100 nm or less may be 40 particles/µm² or more.

Also, in the spring according to an embodiment of the present disclosure, a density of the carbides having the thickness of 100 nm or less may be 64 particles/µm² or less.

Also, the spring according to an embodiment of the present disclosure may have a dislocation density of 6.0x10¹³/m² or more.

Also, the spring according to an embodiment of the present disclosure may have a dislocation density of 3.0x10¹⁴/m² or less.

Also, the spring according to an embodiment of the present disclosure may include, in percent by weight (wt%), 0.48 to 0.62% of carbon (C), and 1.5 to 2.0% of silicon (Si).

Also, the spring according to an embodiment of the present disclosure may include, in percent by weight (wt%), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities-

Also, in the spring according to an embodiment of the present disclosure, the average thickness of the carbides having the thickness of 100 nm or less may be 6 nm to 10 nm.

Also, the spring according to an embodiment of the present disclosure may have a minimum outer diameter (D) relative to a diameter (d) of 4 or more (D/d≥4).

Also, the spring according to an embodiment of the present disclosure may have a tensile strength of 2000 MPa or more.

Also, in the spring according to an embodiment of the present disclosure, a permanent deformation, which is a height difference before and after compression for 48 hours, may be 3.0 mm or less.

A steel wire for a spring according to another embodiment of the present disclosure includes 90% or more of a tempered martensite structure in an area fraction, and among Fe carbides precipitated in the tempered martensite structure, an average thickness of carbides having a thickness of 100 nm or less is 5 nm to 12 nm.

Also, the steel wire for the spring according to an embodiment of the present disclosure may include, in percent by weight (wt%), 0.48 to 0.62% of carbon (C), and 1.5 to 2.0% of silicon (Si).

Also, the steel wire for the spring according to an embodiment of the present disclosure may include, in percent by weight (wt%), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities-

Also, in the steel wire for the spring according to an embodiment of the present disclosure, the average thickness of the carbides having the thickness of 100 nm or less may be 6 nm to 10 nm.

Also, in the steel wire for the spring according to an embodiment of the present disclosure, a density of the carbides having the thickness of 100 nm or less may be 40 particles/µm² to 64 particles/µm².

Also, the steel wire for the spring according to an embodiment of the present disclosure may have a fatigue strength ratio of 0.45 or more.

A wire rod for a spring according to another embodiment of the present disclosure includes, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities.

Also, in the wire rod for the spring according to an embodiment of the present disclosure, a thickness of a ferrite decarburized layer may be 0.03 mm or less.

A method for manufacturing a wire rod for a spring according to another embodiment of the present disclosure includes: preparing a billet including, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities; finish-rolling the billet at 930°C to 1010°C to manufacture the wire rod; and cooling the wire rod to 730°C at a cooling rate of more than 10°C/s after the finish-rolling.

A method for manufacturing a steel wire for a spring according to another embodiment of the present disclosure includes: preparing a wire rod including, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities; reheating at 900°C to 990°C and then quenching; and tempering the quenched wire rod at 415°C to 465°C.

Also, the method for manufacturing the steel wire for the spring according to an embodiment of the present disclosure may further include secondary tempering at 300°C to 400°C after the tempering.

Also, in the method for manufacturing the steel wire for the spring according to an embodiment of the present disclosure, the steel wire may include 90% or more of a tempered martensite structure in an area fraction, and among Fe carbides precipitated in the tempered martensite structure, an average thickness of carbides having a thickness of 100 nm or less may be 5 nm to 12 nm, a density of the carbides may be 20 particles/µm² to 64 particles/µm², and a dislocation density may be 6.0x10¹³/m² to 3.0x10¹⁴/m².

A method for manufacturing a spring according to another embodiment of the present disclosure includes: cold forming a compression coil spring manufactured such that a minimum outer diameter (D) of the spring relative to a diameter (d) of a steel wire is 4 or more (D/d≥4); and performing stress relief heat treatment at 190°C to 290°C.

Also, in the method for manufacturing the spring according to an embodiment of the present disclosure, the spring may include 90% or more of a tempered martensite structure in an area fraction, and among Fe carbides precipitated in the tempered martensite structure, an average thickness of carbides having a thickness of 100 nm or less may be 5 nm to 12 nm, a density of the carbides may be 20 particles/µm² to 64 particles/µm², and a dislocation density may be 6.0x10¹³/m² to 3.0x10¹⁴/m².

### [Advantageous Effects]

According to an embodiment of the present disclosure, a wire rod and a steel wire for a spring, a spring, and methods for manufacturing the same, having improved permanent deformation resistance and excellent tensile strength and fatigue strength ratio may be provided by controlling alloy components and manufacturing methods.

Technical aspects that can be achieved by the disclosure are not limited to the above-mentioned aspects, and other technical aspects not mentioned will be clearly understood by one of ordinary skill in the technical art to which the disclosure belongs from the following description.

### [Description of Drawings]

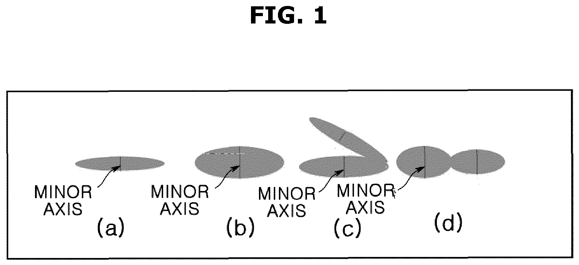

FIG. 1 is a diagram showing a shape and a minor axis of a unit carbide observed through a transmission electron microscope (TEM) in an embodiment.

### [Mode for Invention]

Hereinafter, embodiments of the present disclosure will be described in detail with reference to the accompanying drawings. The following embodiments are presented to fully convey the spirit of the present disclosure to those skilled in the art to which the present disclosure pertains, and are not limited to those shown herein, but may be embodied in other forms. The drawings may omit figures not pertinent to the description in order to clarify the present disclosure, and the sizes of configurations may be exaggerated for the purpose of illustration.

Throughout the specification, the terms "include" or "comprise" an element do not preclude other elements but may further include another element, unless otherwise stated.

As used herein, the singular forms are intended to include the plural forms as well, unless the context clearly indicates otherwise.

Hereinafter, a spring according to an embodiment of the present disclosure is described.

A spring according to an embodiment of the present disclosure includes a tempered martensite structure, and among Fe carbides precipitated in the tempered martensite structure, an average thickness of carbides having a thickness of 100 nm or less is 5 nm to 12 nm. Here, the average thickness of the carbide refers to an average value of thicknesses for each of a plurality of unit carbides, and the thickness of the unit carbide used to calculate the average thickness refers to a length of a minor axis in a cross-section of the carbide, which is not limited by a cutting direction of the cross-section of the carbide, and may be, for example, a C cross-section or an L cross-section direction. Here, the minor axis may refer to the largest width among widths perpendicular to a major axis, and the major axis may refer to the longest diameter of a grain. FIG. 1 is a diagram showing the shape and the minor axis of the unit carbide observed through the transmission electron microscope (TEM) in the present disclosure. Here, when measured by TEM, the unit carbide may generally have an elliptical or quasi-elliptical structure such as (a) or (b), but it may also be observed in a shape where carbides are overlapped, such as (c) or (d). Referring to FIG. 1, in the case of (a) or (b), the thickness of the unit carbide refers to the minor axis as indicated, and in the case of (c) or (d), the thickness of the unit carbide refers to the length of the longest minor axis among the minor axes of the carbide.

The carbide is an obstacle that hinders the movement of dislocation. Also, when the carbide is large, a dispersion effect is small. Accordingly, in the present disclosure, a carbide of 100 nm or less is set as an effective carbide, and this is because a nano-carbide of 100 nm or less acts to improve the strength that hinders the movement of dislocation, while excluding micron-sized coarse carbides that do not affect the improvement of permanent deformation resistance in order to remove errors in the average.

In other words, the average thickness of the carbides having a thickness of 100 nm or less in the tempered matensite structure is controlled to be 5 nm to 21 nm. That is, when the avarage thickness of the carbides having a thickness of 100 nm or less is less than 5 nm, the movement of dislocation may not be hindered since the dislocation cuts through the carbide and moves, and when the average thickness exceeds 12 nm, the fatigue strength and permanent deformation resistance required by the present disclosure may not be satisfied due to coarse carbides. Preferably, the average thickness of the carbides having a thickness of 100 nm or less may be 6 nm to 10 nm.

Permanent deformation may occur when microstructural defects that act as a strengthening mechanism for the spring and steel material fail to function, and the strengthening mechanism of the tempered martensite structure may be dislocation, precipitates, and solid solution elements (supersaturated [C], solid solution [Mn], etc.). Dislocations combine with each other and annihilate, precipitates combine with each other and coarsen, and supersaturated [C] precipitates, causing a decrease in strength and thus permanent deformation. According to the present disclosure, softening caused by dislocation among strengthening mechanisms in an environment may be prevented.

Also, the spring according to an embodiment of the present disclosure may include 90% or more of the tempered martensite structure in an area fraction.

Also, in the spring according to an embodiment of the present disclosure, a density of the carbides having a thickness of 100 nm or less may be 20 particles/µm² or more, preferably 40 particles/µm² or more, and more preferably 64 particles/µm² or less. When a density of fine carbides is less than 20 particles/µm², the movement of dislocation is free, and thus dislocations meet and annihilate, causing softening of the material strength. When the density is 40 particles/µm², the balance between strength and softening resistance is most suitable. On the other hand, for the carbides to exceed 64 particles per µm², the carbon content in the steel should be high. In this case, strength is increased and formability is deteriorated, and thus the density of the carbides having a thickness of 100 nm or less is controlled to be 64 particles/µm² or less.

Also, the spring according to an embodiment of the present disclosure may have a dislocation density of 6.0x10¹³/m² or more, and 3.0x10¹⁴/m² or less. In the case where the dislocation density exceeds 3.0x10¹⁴/m², dislocation annihilation becomes easy, and the fatigue strength and permanent deformation resistance may be deteriorated. In addition, in the case where a carbon content of 0.48% or more is included, the dislocation density may be controlled to 6.0x10¹³/m² or more to achieve a strength of 2,000 MPa or more. In particular, dislocations are formed when transformed into martensite during quenching after heating, and some of the dislocations are annihilated during tempering. However, in the present disclosure, the dislocation density may be reduced by increasing a tempering temperature through Si addition, and a solid solution strengthening effect by Si addition and a precipitation strengthening effect by fine carbides may be controlled in a balanced manner.

Also, the spring according to an embodiment of the present disclosure may include, in percent by weight (wt%), 0.48 to 0.62% of carbon (C), and 1.5 to 2.0% of silicon (Si), and may further include 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities.

Hereinafter, reasons for numerical limitations on the contents of alloy elements in the embodiment of the present disclosure is described. Hereinafter, the unit is wt% unless otherwise stated.

The content of C (carbon) is preferably 0.48 to 0.62%.

C is an element effective for increasing strength by solid solution strengthening, precipitation strengthening, and martensite strengthening. A tempered martensite structure may be realized when the carbon content is 0.18% to 0.70%, and particularly, to secure formability into a spring at a strength of 2000 MPa or more required for spring products, the carbon content of 0.48 to 0.62% is preferable. In particular, an excessive C content may impair toughness, causing sudden brittle fracture. Considering the above, the C content is preferably 0.48 to 0.62%.

The content of Si (silicon) is preferably 1.5 to 2.0%.

Si is an element that may be used for deoxidation of steel, suppress the growth of carbides during tempering, and enable an increase in tempering temperature. Si may be included at 1.2 to 2.5%. When the tempering temperature increases, a dislocation strengthening effect decreases due to dislocation annihilation, an increased precipitation amount of solid solution C reduces a solid solution strengthening effect, and growth of precipitated carbides reduces a precipitation strengthening effect. In response to the strength decrease caused by the reduction in the dislocation strengthening effect and the reduction in the solid solution strengthening effect of carbon, Si may delay carbide growth to enhance the precipitation strengthening effect and may increase the solid solution strengthening effect of silicon to achieve a target strength. Accordingly, the precipitation strengthening effect may be increased by forming ultrafine carbides at the target strength, and the dislocation strengthening effect may be reduced by dislocation annihilation. Thus, the addition of Si may minimize the annihilation of mobile dislocations during repeated fatigue, thereby improving permanent deformation resistance. Considering the above, Si may be added in an amount of 1.5% or more. However, in the case where the content of Si exceeds 2.0%, the activity of carbon increases during addition in the wire rod manufacturing process, accelerating decarbonization and making decarbonization control difficult in general wire rod manufacturing facilities. Thus, the Si content is preferably 1.5 to 2.0%.

The content of Mn (manganese) is preferably 0.2 to 0.55%.

Mn is an element that improves hardenability and may be included in an amount of 1.2% or less. The addition of Mn precipitates S, which is an impurity in steel, as MnS, thereby preventing hot surface shortness due to low-melting point emulsion. Considering the above, Mn may be added in an amount of 0.2% or more. However, an excessive Mn content may increase the dislocation density during quenching heat treatment, and impair the permanent deformation resistance. Accordingly, the content of Mn is preferably 0.2 to 0.55%.

The content of P (phosphorus) may be 0.015% or less.

P is an element that segregates in grain boundaries and may impair impact toughness. Considering the above, the content of P may be limited to 0.015% or less.

The content of S (sulfur) may be 0.020% or less.

S, like P, not only segregates in grain boundaries to deteriorate toughness, but is also an element that forms low-melting point emulsion to hinder hot rolling. Considering the above, the content of S may be 0.020% or less.

The content of Cr (chromium) is preferably 0.5 to 0.8%.

Cr is an element effective for improving hardenability and obtaining strength, and may be included in an amount of 1.2% or less. Cr, similar to Si, acts to suppress carbide growth during tempering. Considering the above, the content of Cr may be added in an amount of 0.5% or more. However, an excessive Cr content may form a chromium oxide layer on the surface, and a C/A ratio of corrosion pits increases, which may cause a notch effect. Accordingly, the excessive Cr content is not preferable in terms of corrosion fatigue durability. Thus, the Cr content is preferably 0.5 to 0.8%.

The content of N (nitrogen) may be 0.003 to 0.015%.

N may combine with Ti added in steel to form nitrides. To produce with an N content of less than 0.003%, manufacturing costs may increase. However, in the case where the content of N exceeds 0.015%, coarse nitrides may be formed, and impact toughness may be reduced.

The content of V, W, Mo, Ti, or Nb may each be 0.05% or less.

V, W, Mo, Ti, or Nb form coarse carbonitrides and hinder the formation of fine carbides, and thus the content of each of V, W, Mo, Ti, or Nb is controlled to be 0.05% or less in the present disclosure.

The remaining component of the present disclosure is iron (Fe). However, since unintended impurities may inevitably be introduced from raw materials or the surrounding environment during a typical manufacturing process, this may not be excluded. Since such impurities may be well known to those skilled in the art during a typical manufacturing process, details thereof are not described in this specification.

Also, in the spring according to an embodiment of the present disclosure, a minimum outer diameter (D) relative to a diameter (d) may be 4 or more (D/d≥4).

Also, the spring according to an embodiment of the present disclosure may have a tensile strength of 2000 MPa or more.

Also, in the spring according to an embodiment of the present disclosure, a permanent deformation, which is a height difference before and after compression at a stress of 1274 MPa for 48 hours, may be 3.0 mm or less.

Hereinafter, a steel wire for a spring according to an embodiment of the present disclosure is described.

The steel wire for the spring according to another embodiment of the present disclosure includes 90% or more of a tempered martensite structure in an area fraction, and among Fe carbides precipitated in the tempered martensite structure, an average thickness of carbides having a thickness of 100 nm or less is 5 nm to 12 nm. In the tempered martensite structure, carbides formed during tempering may restrict the movement of dislocation, thereby improving fatigue strength and permanent deformation resistance. In addition to the tempered martensite structure, retained austenite may be included, and in the case where a fraction of the retained austenite exceeds 10%, the retained austenite transforms into martensite during spring forming, thereby reducing formability. In particular, even though fracture does not occur during forming, martensite transformed during forming has a high dislocation density without carbide precipitation, and thus dislocation annihilation is accelerated, thereby facilitating the occurrence of permanent deformation. Accordingly, the fraction of the retained austenite is controlled to be 10% or less.

When the average thickness of the carbides having a thickness of 100 nm or less is less than 5 nm, the movement of dislocation may not be hindered since the dislocation cuts through the carbide and moves, and when the average thickness exceeds 12 nm, the fatigue strength and permanent deformation resistance required by the present disclosure may not be satisfied due to coarse carbides. Preferably, the average thickness of the carbides having a thickness of 100 nm or less may be 6 nm to 10 nm.

Also, the steel wire for the spring according to an embodiment of the present disclosure may include, in percent by weight (wt%), 0.48 to 0.62% of carbon (C), and 1.5 to 2.0% of silicon (Si).

Also, the steel wire for the spring according to an embodiment of the present disclosure may include, in percent by weight (wt%), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities.

Also, in the steel wire for the spring according to an embodiment of the present disclosure, a density of the carbides having a thickness of 100 nm or less may be 40 particles/µm² to 64 particles/µm².

Also, the steel wire for the spring according to the present disclosure may have a fatigue strength ratio (fatigue strength/tensile strength) of 0.45 or more. When the fatigue strength ratio is less than 0.45, a tempering heat treatment temperature is to be lowered to increase the strength of the steel wire for the spring and achieve a required fatigue life of the spring. As a result, the dislocation density increases and the permanent deformation resistance is deteriorated.

Hereinafter, a wire rod for a spring according to an embodiment of the present disclosure is described.

The wire rod for the spring according to another embodiment of the present disclosure includes, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities.

Also, in the wire rod for the spring according to an embodiment of the present disclosure, a thickness of a ferrite decarburized layer may be 0.03 mm or less. During the heat treatment of the steel wire by reheating the wire rod, carbon recovery occurs as internal carbon diffuses to the surface due to austenitizing heat treatment, and a decarburized layer with a thickness of 0.03 mm or less may undergo carbon recovery. Accordingly, the thickness of the ferrite decarburized layer is controlled to be 0.03 mm or less.

Next, a method for manufacturing a wire rod for a spring according to an embodiment of the present disclosure is described.

The method for manufacturing the wire rod for the spring according to another embodiment of the present disclosure includes: preparing a billet including, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities; finish-rolling the billet at 930°C to 1010°C to manufacture the wire rod; and cooling the wire rod to 730°C at a cooling rate of more than 10°C/s after the finish-rolling. In the case where a finish-rolling temperature is low, surface ferrite decarbonization may occur. However, in the case where the finish-rolling temperature is high, a thick total decarburized layer may occur on the surface and grain may be coarsened, preventing a target permanent deformation resistance. During the process of rapidly cooling to 730°C at 10°C/s or more, rapid cooling is performed down to a pearlite transformation region, allowing a surface layer to avoid a surface decarbonization temperature region caused by ferrite phase transformation.

Next, a method for manufacturing a steel wire for a spring according to an embodiment of the present disclosure is described.

The method for manufacturing the steel wire for the spring according to another embodiment of the present disclosure includes: preparing a wire rod including, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities; reheating at 900°C to 990°C and then quenching; and tempering the quenched wire rod at 415°C to 465°C. In the case where a reheating temperature exceeds 990°C, a grain size may become coarse. However, in the case where the reheating temperature is lower than 900°C, pearlite may not be sufficiently reverse-transformed and the spring formability may be deteriorated by residual pearlite. Accordingly, the reheating temperature is controlled at 900°C to 990°C. In addition, in the case where a tempering temperature exceeds 465°C, a target tensile strength may not be satisfied, and in the case where the tempering temperature is lower than 415°C, the dislocation density is high, and thus the fatigue strength is lowered due to annihilation of mobile dislocations during a fatigue test and permanent deformation may occur. Accordingly, the tempering temperature is controlled to 415°C to 465°C.

Also, the method for manufacturing the steel wire for the spring according to an embodiment of the present disclosure may further include a process of secondary tempering at 300°C to 400°C after the tempering. In the case where the secondary tempering is performed at a temperature less than 300°C, dislocation annihilation is not effectively achieved, and due to the prolonged heat treatment time, supersaturated carbon may be selectively precipitated in prior austenite grain boundaries, causing tempered martensite embrittlement. On the other hand, in the case where the temperature exceeds 400°C, it is effective for dislocation annihilation, but precipitates may be coarsened, and thus a desired size and density of carbides may not be controlled.

Also, in the method for manufacturing the steel wire for the spring according to an embodiment of the present disclosure, the steel wire may include 90% or more of a tempered martensite structure in an area fraction, and among Fe carbides precipitated in the tempered martensite structure, an average thickness of carbides having a thickness of 100 nm or less may be 5 nm to 12 nm, a density of the carbides may be 20 particles/µm² to 64 particles/µm², and a dislocation density may be 6.0x10¹³/m² to 3.0x10¹⁴/m².

Next, a method for manufacturing a spring according to another embodiment of the present disclosure is described.

The method for manufacturing the spring according to another embodiment of the present disclosure includes: cold forming a compression coil spring manufactured such that a minimum outer diameter (D) of the spring product relative to a diameter (d) of the steel wire is 4 or more (D/d≥4); and performing stress relief heat treatment at 190°C to 290°C. In the case where the outer diameter of the product is less than 4, a large amount of processing occurs during cold forming, generating a large amount of mobile dislocations. As a result, a target tensile strength may not be obtained due to excessive dislocation annihilation during stress relief heat treatment for residual stress relief. Accordingly, to have a tensile strength of 2000 MPa or more, the outer diameter of the spring should be formed to be 4 or more relative to the diameter of the steel wire. In the case where a stress relief heat treatment temperature is lower than 190°C, residual stress relief is insufficient, and delayed fracture occurs at residual hydrogen concentration sites introduced during the manufacturing process. In the case where the heat treatment temperature exceeds 290°C, dislocations annihilate and carbide growth occurs, and thus the target tensile strength or target permanent deformation resistance may not be achieved.

Also, in the method for manufacturing the spring according to an embodiment of the present disclosure, the spring may include 90% or more of a tempered martensite structure in an area fraction, and among Fe carbides precipitated in the tempered martensite structure, an average thickness of carbides having a thickness of 100 nm or less may be 5 nm to 12 nm, a density of the carbides may be 20 particles/µm² to 64 particles/µm², and a dislocation density may be 6.0x10¹³/m² to 3.0x10¹⁴/m².

Hereinafter, the present disclosure is described in more detail through embodiments. However, the descriptions of the embodiments are only for illustrating the implementation of the present disclosure, and the present disclosure is not limited by the descriptions of the embodiments. This is because the scope of the rights of the present disclosure is determined by matters described in the scope of claims and matters reasonably inferred therefrom.

### {Embodiments}

With respect to the various alloy component ranges shown in Table 1 below, 40-60 kg ingots were manufactured in a vacuum induction melting furnace. The manufactured billets were subjected to a solution heat treatment for 4 hours in the heating furnace at 1200°C to remove a cast structure. Thereafter, welding was performed on a rear end of a 10 m long billet to manufacture the wire rod from the billet. The welded billet was finish-rolled into a wire rod with a diameter of 15 mm, was rapidly cooled to 730°C at an average cooling rate of 12°C/s, and then slowly cooled to room temperature. Thereafter, the billet was drawn to a diameter of 13.8 mm, and then reheated using an induction heating heat treatment method and quenched. The quenched wire rod was tempered to manufacture a steel wire.

The finish-rolling temperature, the reheating temperature, and the tempering temperature are shown in Table 2.

**[Table 1]**

| | Alloy component (wt%) | | | | | | |
|---|---|---|---|---|---|---|---|
| | C | Si | Mn | P | S | Cr | N |
| Experimental Steel 1 | 0.49 | 1.65 | 0.3 | 0.01 | 0.004 | 0.6 | 0.004 |
| Experimental Steel 2 | 0.53 | 1.63 | 0.32 | 0.01 | 0.004 | 0.59 | 0.004 |
| Experimental Steel 3 | 0.61 | 1.62 | 0.36 | 0.01 | 0.005 | 0.66 | 0.004 |
| Experimental Steel 4 | 0.56 | 1.51 | 0.35 | 0.011 | 0.004 | 0.64 | 0.004 |
| Experimental Steel 5 | 0.56 | 1.69 | 0.39 | 0.011 | 0.004 | 0.51 | 0.004 |
| Experimental Steel 6 | 0.55 | 1.97 | 0.34 | 0.01 | 0.004 | 0.64 | 0.004 |
| Experimental Steel 7 | 0.56 | 1.64 | 0.2 | 0.009 | 0.005 | 0.71 | 0.004 |
| Experimental Steel 8 | 0.54 | 1.66 | 0.54 | 0.011 | 0.004 | 0.69 | 0.004 |
| Experimental Steel 9 | 0.57 | 1.62 | 0.39 | 0.01 | 0.005 | 0.51 | 0.004 |
| Experimental Steel 10 | 0.54 | 1.71 | 0.42 | 0.011 | 0.004 | 0.8 | 0.004 |
| Experimental Steel 11 | **0.47** | 1.62 | 0.31 | 0.01 | 0.004 | 0.55 | 0.004 |
| Experimental Steel 12 | **0.63** | 1.66 | 0.3 | 0.011 | 0.004 | 0.56 | 0.004 |
| Experimental Steel 13 | 0.56 | **1.48** | 0.4 | 0.011 | 0.004 | 0.66 | 0.004 |
| Experimental Steel 14 | 0.57 | **2.03** | 0.39 | 0.01 | 0.004 | 0.65 | 0.004 |
| Experimental Steel 15 | 0.57 | 1.66 | **0.18** | 0.01 | 0.004 | 0.64 | 0.004 |
| Experimental Steel 16 | 0.56 | 1.65 | **0.56** | 0.009 | 0.005 | 0.69 | 0.004 |
| Experimental Steel 17 | 0.55 | 1.65 | 0.35 | 0.01 | 0.004 | **0.48** | 0.004 |
| Experimental Steel 18 | 0.55 | 1.65 | 0.3 | 0.011 | 0.004 | **0.82** | 0.004 |
| Experimental Steel 19 | 0.56 | 1.69 | 0.39 | 0.011 | 0.004 | 0.51 | 0.004 |
| Experimental Steel 20 | 0.56 | 1.69 | 0.39 | 0.011 | 0.004 | 0.51 | 0.004 |
| Experimental Steel 21 | 0.56 | 1.69 | 0.39 | 0.011 | 0.004 | 0.51 | 0.004 |
| Experimental Steel 22 | 0.56 | 1.69 | 0.39 | 0.011 | 0.004 | 0.51 | 0.004 |

**[Table 2]**

| | Steel Type | Finish-rolling temperature (°C ) | Reheating temperature (°C ) | Tempering temperature (°C ) |
|---|---|---|---|---|
| Experimental Example1 | Experimental Steel 1 | **939** | **904** | **425** |
| Experimental Example2 | Experimental Steel 1 | **1008** | **904** | **425** |
| Experimental Example3 | Experimental Steel 1 | **939** | **988** | **426** |
| Experimental Example4 | Experimental Steel 1 | **1008** | **988** | **426** |
| Experimental Example5 | Experimental Steel 2 | 932 | 935 | 415 |
| Experimental Example6 | Experimental Steel 2 | 999 | 935 | 415 |
| Experimental Example7 | Experimental Steel 2 | 932 | 929 | 459 |
| Experimental Example8 | Experimental Steel 2 | 999 | 929 | 459 |
| Experimental Example9 | Experimental Steel 3 | **954** | **951** | **416** |
| Experimental Example 10 | Experimental Steel 3 | **954** | **948** | **424** |
| Experimental Example 11 | Experimental Steel 3 | **954** | **949** | **439** |
| Experimental Example12 | Experimental Steel 3 | **954** | **950** | **461** |
| Experimental Example 13 | Experimental Steel 4 | 954 | 951 | 435 |
| Experimental Example14 | Experimental Steel 5 | 954 | 951 | 435 |
| Experimental Example15 | Experimental Steel 6 | **931** | **901** | **448** |
| Experimental Example16 | Experimental Steel 6 | **1010** | **901** | **448** |
| Experimental Example17 | Experimental Steel 6 | **931** | **990** | **451** |
| Experimental Example18 | Experimental Steel 6 | **1010** | **990** | **451** |
| Experimental Example19 | Experimental Steel 7 | 955 | 945 | 429 |
| Experimental Example20 | Experimental Steel 8 | 955 | 945 | 429 |
| Experimental Example21 | Experimental Steel 9 | 955 | 945 | 429 |
| Experimental Example22 | Experimental Steel 10 | 955 | 945 | 429 |
| Experimental Example23 | Experimental Steel 11 | 919 | 931 | 426 |
| Experimental Example24 | Experimental Steel 12 | 942 | 925 | 454 |
| Experimental Example25 | Experimental Steel 13 | 930 | 929 | 435 |
| Experimental Example26 | Experimental Steel 14 | 929 | 924 | 455 |
| Experimental Example27 | Experimental Steel 15 | 939 | 929 | 436 |
| Experimental Example28 | Experimental Steel 16 | 932 | 931 | 433 |
| Experimental Example29 | Experimental Steel 17 | 932 | 931 | 425 |
| Experimental Example30 | Experimental Steel 18 | 932 | 930 | 454 |
| Experimental Example31 | Experimental Steel 19 | **889** | 930 | 437 |
| Experimental Example32 | Experimental Steel 20 | 930 | **892** | 435 |
| Experimental Example33 | Experimental Steel 21 | 922 | 924 | **412** |
| Experimental Example34 | Experimental Steel 22 | 945 | 911 | **467** |

Table 3 below shows an average carbide thickness, dislocation density, tensile strength, fatigue strength ratio, and permanent deformation amount. The average carbide thickness was measured using transmission electron microscopy (TEM). Specifically, using a specimen prepared by a replica method, 10 random locations were measured at a magnification of 160K, and then component analysis was performed by energy dispersive X-ray spectroscopy (EDS) to observe the average thickness of the parts confirmed to be carbides. The replica specimen was prepared by polishing a sample with sandpaper and then etching with a 10% AA solution (acetylacetone + 1% tetramethylammonium chloride + methanol). Thereafter, carbon coating was performed on the surface of the specimen using JEOL JEE-420 Vacuum Evaporator, and the specimen was mounted on a Cu grid to observe the structure using a TEM from FEI Tecnai OSIRIS. In parallel, a 3mm thin foil specimen was prepared by polishing a sample with sandpaper to a thickness of 80µm, punching the specimen into a 3mm circular shape, and then electrolysis etching with 10% perchloric acid and 90% acetic acid.

Meanwhile, the average carbide thickness was obtained by measuring the average thickness of precipitated carbides having a thickness of 100 nm or less.

The density of carbides was defined by preparing a specimen prepared by a replica method and a 3mm thin foil specimen, measuring 10 random locations each at a magnification of 160,000x, and defining the area of the carbides as the density. In this instance, the area of the carbide was measured by printing a carbide photograph, coloring the carbide on a transparent film sheet, scanning the film sheet, and then analyzing the observed area with an image ANALYZER program to measure the density. The replica specimen was prepared by polishing a sample with sandpaper and then etching with a 10% AA solution (acetylacetone + 1% tetramethylammonium chloride + methanol). Thereafter, carbon coating was performed on the surface of the specimen using JEOL JEE-420 Vacuum Evaporator, and the specimen was mounted on a Cu grid to observe the structure using a TEM from FEI Tecnai OSIRIS. In parallel, a 3mm thin foil specimen was prepared by polishing a sample with sandpaper to a thickness of 80µm, punching the specimen into a 3mm circular shape, and then electrolysis etching with 10% perchloric acid and 90% acetic acid.

The dislocation density was measured using X-Ray Diffraction (XRD). The dislocation density was analyzed using Convolutional Multiple Whole Profile (CMWP) software after measurement with CuKα Radiation (40kv 40mA), 40°<2θ<100°, 0.02°/sec. For the detailed experimental methods, refer to in K. Murasawa, Materials Transactions Vol. 59, p. 1135 (2018).

The tensile strength was tested at a strain rate of 0.01/s by processing a specimen with a diameter of 4 mm in the form of JIS No. 4 subsize specimen according to JIS Z2241.

The fatigue strength was tested by a rotating bending fatigue test in R = -1 mode using a JIS No. 1 specimen with a gauge diameter of 5 mm, according to JIS Z2274. The strength at which a fatigue life of 10 million cycles was satisfied was defined as the fatigue strength, and the fatigue strength ratio = fatigue strength ÷ tensile strength.

The permanent deformation amount was measured by compressing a specimen at 1274 MPa, maintaining for 48 hours, and then measuring the height difference before and after compression.

**[Table 3]**

| | Steel type | Carbi de densit y | Avera ge carbid e thickn ess | Disl ocati on densi ty | Tensil e streng th | Fatig ue stren gth ratio | Perma nent defor matio n amoun t | Decar boniz ation thickn ess | TM tissue fractio n |
|---|---|---|---|---|---|---|---|---|---|
| | | (partic le/ µm⁻²) | (nm) | (10¹³ /m-²) | (MPa) | | (mm) | (mm) | (%) |
| Experime ntal Example 1 | Experimen tal Steel 1 | 22 | 8.6 | 9.5 | 2013 | 0.45 | 2.9 | 0.02 | ≥96 |
| Experime ntal Example 2 | Experimen tal Steel 1 | 22 | 8.7 | 9.4 | 2015 | 0.45 | 2.9 | 0.01 | ≥96 |
| Experime ntal Example 3 | Experimen tal Steel 1 | 20 | 9.1 | 10 | 2009 | 0.45 | 3.0 | 0.02 | ≥96 |
| Experime ntal Example 4 | Experimen tal Steel 1 | 20 | 9.1 | 10 | 2007 | 0.45 | 3.0 | 0.01 | ≥96 |
| Experime ntal Example 5 | Experimen tal Steel 2 | 40 | 9.6 | 29 | 2032 | 0.48 | 2.7 | 0.02 | 91 |
| Experime ntal Example 6 | Experimen tal Steel 2 | 41 | 9.5 | 28 | 2039 | 0.48 | 2.8 | 0.01 | 91 |
| Experime ntal Example 7 | Experimen tal Steel 2 | 21 | 10.9 | 6.9 | 2002 | 0.46 | 3.0 | 0.02 | ≥96 |
| Experime ntal Example 8 | Experimen tal Steel 2 | 21 | 10.7 | 6.4 | 2004 | 0.46 | 3.0 | 0.02 | ≥96 |
| Experime ntal Example 9 | Experimen tal Steel 3 | 58 | 5.9 | 29 | 2111 | 0.45 | 2.9 | 0.01 | 93 |
| Experime ntal Example 10 | Experimen tal Steel 3 | 57 | 6.4 | 18 | 2085 | 0.48 | 2.6 | 0.01 | 95 |
| Experime ntal Example 11 | Experimen tal Steel 3 | 56 | 8.8 | 9.9 | 2041 | 0.49 | 2.4 | 0.01 | ≥96 |
| Experime ntal Example 12 | Experimen tal Steel 3 | 54 | 10.2 | 6.4 | 2001 | 0.45 | 3.0 | 0.01 | ≥96 |
| Experime ntal Example 13 | Experimen tal Steel 4 | 29 | 12.0 | 7.2 | 2002 | 0.45 | 3.0 | 0.00 | ≥96 |
| Experime ntal Example 14 | Experimen tal Steel 5 | 42 | 9.9 | 10 | 2043 | 0.47 | 2.8 | 0.01 | ≥96 |
| Experime ntal Example 15 | Experimen tal Steel 6 | 61 | 8.5 | 6.2 | 2020 | 0.46 | 2.7 | 0.03 | ≥96 |
| Experime ntal Example 16 | Experimen tal Steel 6 | 57 | 8.3 | 6.4 | 2019 | 0.46 | 2.7 | 0.02 | ≥96 |
| Experime ntal Example 17 | Experimen tal Steel 6 | 54 | 8.6 | 7.2 | 2031 | 0.46 | 2.7 | 0.03 | ≥96 |
| Experime ntal Example 18 | Experimen tal Steel 6 | 52 | 8.4 | 7.2 | 2030 | 0.46 | 2.7 | 0.02 | ≥96 |
| Experime ntal Example 19 | Experimen tal Steel 7 | 41 | 9.8 | 13 | 2030 | 0.46 | 2.8 | 0.00 | ≥96 |
| Experime ntal Example 20 | Experimen tal Steel 8 | 42 | 9.9 | 21 | 2035 | 0.46 | 2.8 | 0.00 | ≥96 |
| Experime ntal Example 21 | Experimen tal Steel 9 | 34 | 11.0 | 17 | 2024 | 0.45 | 2.9 | 0.00 | ≥96 |
| Experime ntal Example 22 | Experimen tal Steel 10 | 39 | 9.7 | 19 | 2045 | 0.48 | 2.6 | 0.01 | ≥96 |
| Experime ntal Example 23 | Experimen tal Steel 11 | **18** | 7.0 | 22 | **1995** | **0.42** | **3.3** | 0.00 | ≥96 |
| Experime ntal Example 24 | Experimen tal Steel 12 | **65** | **13.5** | **5.9** | 2045 | **0.44** | **3.1** | 0.00 | ≥96 |
| Experime ntal Example 25 | Experimen tal Steel 13 | 34 | **12.9** | **5.8** | **1997** | **0.43** | **3.3** | 0.00 | ≥96 |
| Experime ntal Example 26 | Experimen tal Steel 14 | 41 | **4.9** | **4.3** | 2045 | **0.43** | **3.6** | **0.04** | ≥96 |
| Experime ntal Example 27 | Experimen tal Steel 15 | 42 | 7.9 | 16 | 2012 | **0.38** | 2.8 | 0.00 | ≥96 |
| Experime ntal Example 28 | Experimen tal Steel 16 | 41 | 8.1 | **31** | 2019 | **0.44** | **3.1** | 0.01 | ≥96 |
| Experime ntal Example 29 | Experimen tal Steel 17 | 43 | 11.0 | **33** | 2009 | 0.45 | **3.3** | 0.01 | ≥96 |
| Experime ntal Example 30 | Experimen tal Steel 18 | **65** | **4.9** | 7.4 | 2034 | **0.44** | **3.1** | 0.00 | ≥96 |
| Experime ntal Example 31 | Experimen tal Steel 19 | 38 | 10.1 | 19 | 2011 | **0.37** | 2.8 | **0.05** | ≥96 |
| Experime ntal Example 32 | Experimen tal Steel 20 | **17** | **22.0** | 18 | 2020 | **0.44** | **3.2** | 0.00 | 94 |
| Experime ntal Example 33 | Experimen tal Steel 21 | **66** | **4.9** | **31** | 2055 | **0.44** | **3.1** | 0.00 | **89** |
| Experime ntal Example 34 | Experimen tal Steel 22 | **19** | **13.0** | **5.9** | **1995** | 0.45 | **3.3** | 0.00 | ≥96 |

Here, TM structure fraction refers to an area fraction of the tempered martensite. Referring to Table 3, Experimental Examples 1 to 22 satisfied the ranges of the alloy components and the manufacturing method of the present disclosure. Accordingly, each of Experimental Examples 1 to 22 exhibits excellent fatigue strength and permanent deformation resistance, since the tempered martensite (TM) structure fraction was 90% or more, the dislocation density was 6.0x10¹³/mm² to 3.0x10¹⁴/mm², the average thickness of carbides having the thickness of 100 nm or less among precipitated carbides was 5 nm to 12 nm, the tensile strength was 2000 MPa or more, the fatigue strength ratio was 0.45 or more, and the permanent deformation amount was 3.0 mm or less.

However, in Experimental Example 23, the carbon (C) content was less than 0.48%, the tensile strength of 2000 MPa was not satisfied, and the carbide density was only less than 20 particles/µm². Also, the fatigue strength ratio was less than 0.45, and the permanent deformation amount exceeded 3.0 mm.

In Experimental Example 24, the carbon (C) content exceeded 0.62%, so the carbide density exceeded 64 particles/µm², and the average thickness of carbides exceeded 12 nm. Also, the dislocation density was only less than 6.0x10¹³/m², the fatigue strength ratio was less than 0.45, and the permanent deformation amount exceeded 3.0 mm.

In Experimental Example 25, the silicon (Si) content was less than 1.5%, so the average thickness of carbides exceeded 12 nm. Also, the dislocation density was only less than 6.0x10¹³/m², the tensile strength was less than 2000 MPa, the fatigue strength ratio was less than 0.45, and the permanent deformation amount exceeded 3.0 mm.

In Experimental Example 26, the silicon (Si) content exceeded 2.0%, so a decarburized layer was formed. In addition, the average carbide thickness was only less than 5 nm, the dislocation density was less than 6.0x10¹³/m², the fatigue strength ratio was less than 0.45, and the permanent deformation amount exceeded 3.0 mm.

In Experimental Example 27, the manganese (Mn) content was less than 0.2%, so the fatigue strength ratio was less than 0.45 due to MnS inclusions.

In Experimental Example 28, the manganese (Mn) content exceeded 0.55% and the dislocation density exceeded 3.0x10¹⁴/m², so the fatigue strength ratio was less than 0.45 and the permanent deformation amount exceeded 3.0 mm.

In Experimental Example 29, the chromium (Cr) content was less than 0.5% and the dislocation density exceeded 3.0x10¹⁴/m², so the permanent deformation amount exceeded 3.0 mm.

In Experimental Example 30, the chromium (Cr) content exceeded 0.8%, so the average carbide thickness was less than 5 nm, the carbide density exceeded 64 particles/µm², the fatigue strength ratio was less than 0.45, and the permanent deformation amount exceeded 3.0 mm.

In Experimental Example 31, the finish-rolling temperature was less than 930°C, so the surface decarburized layer was formed, and the fatigue strength ratio was less than 0.45.

In Experimental Example 32, the reheating temperature was less than 900°C, and the average carbide thickness exceeded 12 nm due to residual undissolved pearlite, so the fatigue strength ratio was less than 0.45, and the permanent deformation amount exceeded 3.0 mm.

In Experimental Example 33, the tempering temperature was less than 415°C, the average carbide thickness was less than 5 nm, the carbide density exceeded 64 particles/µm², and the dislocation density also exceeded 3.0x10¹⁴/m², so the fatigue strength ratio was less than 0.45 and the permanent deformation amount exceeded 3.0 mm. In addition, because the tempering temperature was low, decomposition of retained austenite was insufficient, and the tempered martensite structure fraction was also less than 90%.

In Experimental Example 34, the tempering temperature exceeded 465°C, the average carbide thickness exceeded 12 nm, the carbide density was less than 20 particles/µm², and the dislocation density was also only less than 6.0x10¹³/m², so the tensile strength was less than 2000 MPa, and the permanent deformation resistance also exceeded 3.0 mm.

## Claims

1. A spring comprising a tempered martensite structure,
wherein, among Fe carbides precipitated in the tempered martensite structure, an average thickness of carbides having a thickness of 100 nm or less is 5 nm to 12 nm.

2. The spring of claim 1, wherein the spring comprises 90% or more of the tempered martensite structure in an area fraction.

3. The spring of claim 1, wherein a density of the carbides having the thickness of 100 nm or less is 20 particles/µm² or more.

4. The spring of claim 1, wherein a density of the carbides having the thickness of 100 nm or less is 40 particles/µm² or more.

5. The spring of claim 1, wherein a density of the carbides having the thickness of 100 nm or less is 64 particles/µm² or less.

6. The spring of claim 1, wherein a dislocation density is 6.0x10¹³/m² or more.

7. The spring of claim 1, wherein a dislocation density is 3.0x10¹⁴/m² or less.

8. The spring of claim 1, wherein the spring comprises, in percent by weight (wt%), 0.48 to 0.62% of carbon (C), and 1.5 to 2.0% of silicon (Si).

9. The spring of claim 8, wherein the spring comprises, in percent by weight (wt%), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities.

10. The spring of claim 1, wherein the average thickness of the carbides having the thickness of 100 nm or less is 6 nm to 10 nm.

11. The spring of claim 1, wherein a minimum outer diameter (D) relative to a diameter (d) is 4 or more (D/d≥4).

12. The spring of claim 1, wherein a tensile strength is 2000 MPa or more.

13. The spring of claim 1, wherein a permanent deformation, which is a height difference before and after compression at a stress of 1274 MPa for 48 hours, is 3.0 mm or less.

14. A steel wire for a spring, comprising 90% or more of a tempered martensite structure in an area fraction,
wherein, among Fe carbides precipitated in the tempered martensite structure, an average thickness of carbides having a thickness of 100 nm or less is 5 nm to 12 nm.

15. The steel wire of claim 14, wherein the steel wire comprises, in percent by weight (wt%), 0.48 to 0.62% of carbon (C), and 1.5 to 2.0% of silicon (Si).

16. The steel wire of claim 15, wherein the steel wire comprises, in percent by weight (wt%), 0.48 to 0.62% of carbon (C), and 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities.

17. The steel wire of claim 14, wherein the average thickness of the carbides having the thickness of 100 nm or less is 6 nm to 10 nm.

18. The steel wire of claim 14, wherein a density of the carbides having the thickness of 100 nm or less is 40 particles/µm² to 64 particles/µm².

19. The steel wire of claim 14, wherein a fatigue strength ratio is 0.45 or more.

20. A wire rod for a spring, comprising, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities.

21. The wire rod of claim 20, wherein a thickness of a ferrite decarburized layer is 0.03 mm or less.

22. A method for manufacturing a wire rod for a spring, the method comprising:
preparing a billet comprising, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities;
finish-rolling the billet at 930°C to 1010°C to manufacture the wire rod; and
cooling the wire rod to 730°C at a cooling rate of more than 10°C/s after the finish-rolling.

23. A method for manufacturing a steel wire for a spring, the method comprising:
preparing a wire rod comprising, in percent by weight (wt%), 0.48 to 0.62% of carbon (C), 1.5 to 2.0% of silicon (Si), 0.2 to 0.55% of manganese (Mn), 0.015% or less of phosphorus (P), 0.020% or less of sulfur (S), 0.5 to 0.8% of chromium (Cr), 0.003 to 0.015% of nitrogen (N), the remainder of iron (Fe) and inevitable impurities;
reheating at 900°C to 990°C and then quenching; and
tempering the quenched wire rod at 415°C to 465°C.

24. The method of claim 23, further comprising:
secondary tempering at 300°C to 400°C after the tempering.

25. The method of claim 23, wherein the steel wire comprises 90% or more of a tempered martensite structure in an area fraction,
wherein, among Fe carbides precipitated in the tempered martensite structure, an average thickness of carbides having a thickness of 100 nm or less is 5 nm to 12 nm,
a density of the carbides is 20 particles/µm² to 64 particles/µm², and
a dislocation density is 6.0x10¹³/m² to 3.0x10¹⁴/m².

26. A method for manufacturing a spring, the method comprising:
cold forming a compression coil spring manufactured such that a minimum outer diameter (D) of the spring relative to a diameter (d) of the steel wire manufactured according to the method of claim 23 is 4 or more (D/d≥4); and
performing stress relief heat treatment at 190°C to 290°C.

27. The method of claim 26, wherein the spring comprises 90% or more of a tempered martensite structure in an area fraction,
wherein, among Fe carbides precipitated in the tempered martensite structure, an average thickness of carbides having a thickness of 100 nm or less is 5 nm to 12 nm,
a density of the carbides is 20 particles/µm² to 64 particles/µm², and
a dislocation density is 6.0x10¹³/m² to 3.0x10¹⁴/m².
